(19)

Europäisches
Patentamt
European
Patent Office
Office européen
des brevets

(11) **EP 2 134 012 A1**

(12) **EUROPEAN PATENT APPLICATION**
published in accordance with Art. 153(4) EPC

(43) Date of publication:
**16.12.2009 Bulletin 2009/51**

(21) Application number: **08757811.8**

(22) Date of filing: **20.06.2008**

(51) Int Cl.:
**H04B 10/18** (2006.01)    **H04B 10/12** (2006.01)

(86) International application number:
**PCT/CN2008/071402**

(87) International publication number:
**WO 2009/000198 (31.12.2008 Gazette 2009/01)**

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **22.06.2007 CN 200710028772**

(71) Applicant: **Huawei Technologies Co., Ltd.
Longgang District, Shenzhen
Guangdong 518129 (CN)**

(72) Inventors:
• **ZI, Xiaobing
  Shenzhen Guangdong 518129 (CN)**
• **XU, Huiying
  Shenzhen Guangdong 518129 (CN)**
• **SHEN, Shuqiang
  Shenzhen Guangdong 518129 (CN)**

(74) Representative: **Körber, Martin Hans
Mitscherlich & Partner
Patent- und Rechtsanwälte
Sonnenstraße 33
80331 München (DE)**

(54) **METHOD, SYSTEM AND APPARATUS FOR BUILDING WAVELENGTH CHANNEL**

(57)     A method, a system, and a device for setting up a wavelength connection are disclosed herein. The method includes: obtaining a wavelength path from a source network node to a destination network node and wavelength impairment compensation information of the wavelength path; and setting up the wavelength connection from the source network node to the destination network node according to the wavelength path, and performing impairment compensation for wavelength signals in an interface of each network node on the wavelength path according to the wavelength impairment compensation information during setting up the wavelength connection. The device disclosed herein includes a path calculation server, a network node device, and a control server. The system disclosed herein is a network communication system. The embodiments of the present invention set up an available wavelength connection efficiently, simply and quickly.

FIG. 3

FIG. 4

## Description

CROSS-REFERENCE TO RELATED APPLICATION

This application claims priority to Chinese Patent Application No. 200710028772.6, filed with the Chinese Patent Office on June 22, 2007 and entitled "Method, System and Device for Setting Up Wavelength Connection", which is hereby incorporated by reference in its entirety.

FIELD OF THE INVENTION

The present invention relates to the communication field, and in particular, to a method, a system, and a device for setting up a wavelength connection.

BACKGROUND

In order to make the optical network service scheduling more flexible, the Multi-Protocol Label Switching (MPLS) protocol is extended to generate a Multi-Protocol Lambda-label Switching (MPLmS) protocol applicable to optical networks. The MPLmS protocol applies the basic MPLS concepts to the optical domain, and uses optical wavelength as a switching label. In the MPLmS, each network node floods the Traffic Engineering (TE) information, such as wavelength and penalty on their respective interface, to the network through a routing protocol, such as Open Shortest Path First with Traffic Engineering (OSPF-TE) protocol. In calculating an end-to-end wavelength route, according to such TE information, a wavelength path can be obtained by using a Constrained Shortest Path First (CSPF) algorithm. Afterward, the signaling protocol such as Resource Reservation Protocol with Traffic Engineering (RSVP-TE) protocol can set up an end-to-end connection automatically according to the calculated wavelength path. However, the optical wavelength signal is impaired during transmission. Impairment factors that affect optical signal performance include: power attenuation, dispersion, and noise. Such impairment factors affect performance of optical signals. When the impairment on the path reaches a certain value, the wavelength connection set up according to the wavelength path is unavailable. In order to keep the wavelength connection available, the impairment of the wavelength path cannot exceed a certain value. Currently, there is a method for judging whether the impairment on the path meets requirements. Through such a method, a judgment is made about whether the calculated wavelength path meets the impairment requirement. If the impairment requirement is not fulfilled, the path needs to be calculated and selected again until the path compliant with the impairment constraints is obtained. Afterward, a wavelength connection is set up according to the path, thus ensuring the wavelength connection to be available. The foregoing method for setting up an available wavelength connection involves many attempts of calculating and judging in order to obtain a wavelength path compliant with the impairment requirement, and an available wavelength connection can be set up according to the wavelength path only after such a wavelength path is obtained, thus bringing huge workload, enormous time consumption and low efficiency.

SUMMARY

A method, system and device for setting up a wavelength connection are disclosed in an embodiment of the present invention to set up an available wavelength channel efficiently, simply and quickly.
A method for setting up a wavelength connection is disclosed in an embodiment of the present invention. The method includes:

obtaining a wavelength path from a source network node to a destination network node and wavelength impairment compensation information of the wavelength path; and
setting up a wavelength connection from the source network node to the destination network node according to the wavelength path, and perform impairment compensation for wavelength signals in the interface of each network node on the wavelength path according to the wavelength impairment compensation information in the process of setting up the wavelength connection.

A path calculation server is disclosed in an embodiment of the present invention. The server includes:

a receiving unit, configured to: receive the request of calculating the wavelength path between network nodes, constraint conditions of the wavelength path, and resource information of all network nodes;
a calculating unit, configured to calculate out the wavelength path between the network nodes and the wavelength impairment compensation information of the wavelength path according to the received constraint conditions of the wavelength path and resource information after the receiving unit receives the request of calculating the wavelength path.

A network node device is disclosed in an embodiment of the present invention. The network node device includes:

an obtaining unit, configured to: obtain the constraint conditions of the wavelength path from the network node to a destination network node, and obtain resource information of all network nodes;
a calculating unit, configured to calculate the wavelength path from the network node to the destination network node and the wavelength impairment compensation information of the wavelength path according to the constraint conditions of the wavelength path and the resource information obtained by the obtaining unit; and
a connecting unit, configured to connect wavelengths of different interfaces according to the wavelength path calculated out by the network node.

A control server is disclosed in an embodiment of the present invention. The control server includes:

a receiving unit, configured to receive the information about the wavelength path between network nodes and about the wavelength impairment compensation of the wavelength path; and

a control unit, configured to: control setup of a wavelength connection between the network nodes according to the wavelength path information received by the receiving unit, and control each network node on the wavelength connection to perform impairment compensation for wavelength signals in the interface of each network node according to the information about the wavelength impairment compensation of the wavelength path.

A network communication system is disclosed in an embodiment of the present invention. The network communication system includes multiple network nodes, and further includes:

a path calculation server, configured to: receive the request of calculating the wavelength path between network nodes, constraint conditions of the wavelength path, and network resource information; and calculate out the wavelength path between network nodes and the information about the wavelength impairment compensation of the wavelength path according to the constraint conditions of the wavelength path and the resource information.

The network nodes connect the wavelengths consecutively to set up a wavelength connection according to the wavelength path calculated out by the path calculation server, and perform impairment compensation for the wavelength signals in the interface according to the information about the wavelength impairment compensation of the wavelength path.
Another network communication system is disclosed in an embodiment of the present invention. The network communication system includes multiple network nodes. The network nodes include:

an obtaining unit, configured to: obtain the constraint conditions of the wavelength path from the network node to a destination network node, and obtain resource information of all network nodes;
a calculating unit, configured to calculate the wavelength path from the network node to the destination network node and the wavelength impairment compensation information of the wavelength path according to the constraint conditions of the wavelength path and the resource information obtained by the obtaining unit;
a connecting unit, configured to connect wavelengths of different interfaces according to the wavelength path calculated out by each network node; and
a compensating unit, configured to perform impairment compensation for the wavelength signals in the interface of the network node according to the information about the wavelength impairment compensation of the wavelength path calculated out by each network node.

Through the embodiments of the present invention, the information about the wavelength impairment compensation of the wavelength path is obtained at the same time of obtaining the wavelength path between network nodes, impairment compensation is performed for the transmitted wavelength signals according to the wavelength impairment compensation information in the process of setting up the wavelength connection according to the wavelength path, thus setting up an available wavelength connection efficiently, simply and quickly.

BRIEF DESCRIPTION OF THE DRAWINGS

In order to make the technical solution under the present invention or in the prior art clearer, the accompanying drawings for illustrating the embodiments of the present invention or illustrating the prior art are described briefly below. Evidently, the accompanying drawings are for the exemplary purpose only, and those skilled in the art can derive other drawings from the accompanying drawings without making any creative effort.

FIG. 1 shows a structure of a network communication system in an embodiment of the present invention;

FIG. 2 shows a structure of a network communication system in another embodiment of the present invention;

FIG. 3 shows layout of network nodes in a network communication system in another embodiment of the present invention;

FIG. 4 is flowchart of a method for setting up a wavelength connection in an embodiment of the present invention; and

FIG. 5 is flowchart of a method for setting up a wavelength connection in another embodiment of the present invention.

DETAILED DESCRIPTION

The embodiments of the present invention are detailed below by reference to accompanying drawings.

A network communication system in an embodiment of the present invention includes a path calculation server and multiple network nodes. The path calculation server is configured to:

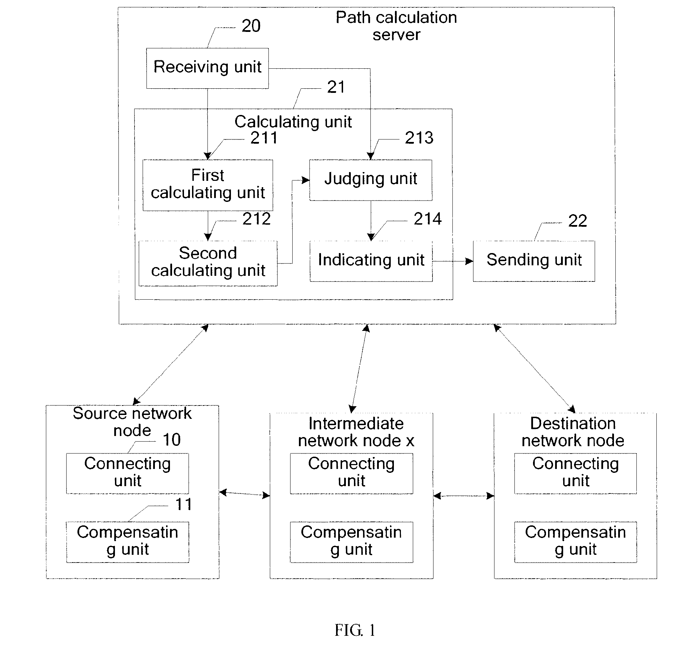

receive the request of calculating the wavelength path between network nodes, constraint conditions of the wavelength path, and network resource information; and calculate out the wavelength path between network nodes and the information about the wavelength impairment compensation of the wavelength path according to the constraint conditions of the wavelength path and the resource information. The network nodes connect the wavelengths consecutively to set up a wavelength connection according to the wavelength path calculated out by the path calculation server, and

perform impairment compensation for the wavelength signals in the interface according to the information about the wavelength impairment compensation of the wavelength path. The description here takes setup of one wavelength connection as an example. FIG. 1 shows a source network node, an intermediate network node x, a destination network node, and a path calculation server in a wavelength connection in this embodiment.

The path calculation server includes a receiving unit 20, a calculating unit 21, and a sending unit 22. The receiving unit 20 is configured to: receive the request of calculating the wavelength path from the source network node to the destination network node, constraint conditions of the wavelength path, and resource information of all network nodes in the network. The receiving unit 20 may obtain the path calculation request and the wavelength path constraint conditions through an extended Path Computation Element Communication Protocol (PCECP). Practice proves that the impairment factors that affect optical signals include power attenuation, dispersion and noise. Therefore, the wavelength path constraint conditions include: power attenuation tolerance of the path, Optical Signal Noise Ratio (OSNR) tolerance, dispersion tolerance, and Polarization Mode Dispersion (PMD) tolerance, or any combination thereof. Meanwhile, the path calculation server needs to know the network resource information in order to calculate out an available wavelength path through the CSPF algorithm. The network resource information includes: interface of the network node, bandwidth of the link corresponding to the interface, penalty of the link corresponding to the interface, power attenuation of optical signals in the interface, adjustability of power parameters, variable range of power parameters, dispersion, adjustability of dispersion compensation parameters, variable range of dispersion compensation parameters, PMD, adjustability of PMD parameters, variable range of PMD parameters, power attenuation of the link connected to the interface, dispersion of the link connected to the interface, and PMD of the link connected to the interface. The receiving unit 20 may obtain the resource information of all network nodes from any network node through a routing protocol, such as an extended OSPF-TE. For example, in FIG. 1, the receiving unit 20 obtains the network resource information from network node 1 through the OSPF-TE. In practice, the resource information may also be obtained in other modes, for example, each network node registers the resource information onto the path calculation server.

The calculating unit 21 is configured to calculate out the wavelength path between the network nodes and the wavelength impairment compensation information of the wavelength path according to the received constraint conditions of the wavelength path and resource information after the receiving unit 20 receives the request of calculating the wavelength path. The wavelength impairment compensation information includes the value or adjustment amount of the power and/or dispersion compensation and/or PMD compensation of wavelength signals in the interface of the network node. In the prior art, after a wavelength path is calculated out through the CSPF, a judgment is made about whether the impairment of the wavelength signal on the wavelength path meets the impairment requirement indicated by the wavelength path constraint conditions. If the impairment does not meet the requirement, the path needs to be calculated and selected again until a path compliant with the impairment constraint conditions is selected, and then a wavelength connection is set up according to this path. The foregoing method for setting up an available wavelength connection involves many attempts of calculating and judging in order to obtain a wavelength path compliant with the impairment requirement, and an available wavelength connection can be set up according to the wavelength path only after such a wavelength path is obtained, thus bringing huge workload, enormous time consumption and low efficiency. In this embodiment, however, the calculating unit 21 calculates out the information about the wavelength impairment compensation of the wavelength path, and an adjustable impairment compensation component is applied on the network node. If the path calculated out does not meet the impairment requirement, the network node may adjust the impairment-related parameters in the path to meet the impairment constraint conditions according to the wavelength impairment compensation information calculated out by the path calculation server at the time of setting up the wavelength connection, without calculating or selecting the path again.

Further, the calculating unit 21 includes a first calculating unit 211, a second calculating unit 212, a judging unit 213, and an indicating unit 214.

The first calculating unit 211 is configured to calculate out the wavelength path between two network nodes according to the resource information.

The second calculating unit 212 is configured to calculate the impair parameters of the wavelength path obtained by the first calculating unit 211. Practice proves that: The impairment factors that affect optical signals include power attenuation, dispersion, and noise. Therefore, the constraint conditions of the wavelength path may include: power attenuation tolerance of the path, OSNR tolerance, dispersion tolerance, PMD tolerance, or any combination thereof. The impairment parameters that need to be calculated depend on the constraint conditions. If a constraint is imposed on the OSNR of the wavelength path, it is necessary to calculate the OSNR value of the wavelength path. A formula for calculating the OSNR value of the path is:

$$OSNR_{out} = -10\log\left(10^{-\left(\frac{P_{in1}-NF_1-10\log(hvv_r)}{10}\right)} + 10^{-\left(\frac{P_{in2}-NF_2-10\log(hvv_r)}{10}\right)} + ... + 10^{-\left(\frac{P_{inN}-NF_N-10\log(hvv_r)}{10}\right)}\right)$$

where Pin1, Pin2, ..., PinN represent the input power of the amplifiers in the wavelength path; NF1, NF2, ..., NFN represent noise factors of the corresponding amplifiers; h is a constant; and w is a wavelength-related fixed value.

Generally, different network nodes are connected through a fiber pair. Two fibers in the fiber pair are responsible for transmitting signals to the peer and receiving signals from the peer. An interface number is assigned to the fiber pair. That is, one interface corresponds to two optical jacks. One optical jack is a transmitting end, namely, source, and the other is a receiving end, namely, sink. An amplifier is deployed at both the transmitting end and the receiving end of each interface. The input power of an amplifier has a default value. If an adjustable power regulating unit or dispersion compensating unit is applied, the input power or the dispersion compensation may be adjusted for a single wavelength.

Through the foregoing OSNR formula, it is evident that the path calculation server needs to know whether the input power Pin of the amplifier in the network node, adjustability of Pin, variable range of Pin, noise factor, and other resource information. Such resource information may be obtained through the routing protocol. For example, a network node can flood the information, for example, power of the interface of the network node, adjustability of the power, variable range, and noise factor, to the path calculation server through the OSPF-TE protocol. Therefore, the existing OSPF-TE protocol needs to be extended by adding a sub-TLV to the Type-Length-Value (TLV) parameter of the OSPF-TE link. The format of the Value part of the sub-TLV is as follows:

```
    0                   1                   2                   3
    0 1 2 3 4 5 6 7 8 9 0 1 2 3 4 5 6 7 8 9 0 1 2 3 4 5 6 7 8 9 0 1
   +-+-+-+-+-+-+-+-+-+-+-+-+-+-+-+-+-+-+-+-+-+-+-+-+-+-+-+-+-+-+-+-+
   | Parameter Type|F|   Reserved |P|              NF             |
   +-+-+-+-+-+-+-+-+-+-+-+-+-+-+-+-+-+-+-+-+-+-+-+-+-+-+-+-+-+-+-+-+
   |          Value1            |            Value2              |
   +-+-+-+-+-+-+-+-+-+-+-+-+-+-+-+-+-+-+-+-+-+-+-+-+-+-+-+-+-+-+-+-+
```

"Parameter Type" indicates type of the parameter, and the value "1" indicates that the type of the parameter is interface power.

The F flag bit indicates whether the parameter is adjustable: "0" means that the parameter is not adjustable, and "1" means that the parameter is adjustable.

The P flag bit indicates the position: "0" indicates adjusting the power of the receiving end amplifier, and "1" indicates adjusting the power of the transmitting end amplifier. If the power parameter of the receiving end and the power parameter of the transmitting end of a wavelength need to be released simultaneously, two interface power parameter sub-TLVs need to be carried.

NF represents the noise factor of the amplifier corresponding to the interface.

Value 1 represents the default value of the input power of the amplifier corresponding to the interface; and Value 2 represents the variable range of the input power.

Through the foregoing extending, each network node can flood the optical signal power parameter in the interface of the network node to the path calculation server, and the path calculation server can use such information to calculate the OSNR of the path.

Likewise, in the case that path dispersion needs to be considered, the path calculation server needs to be capable of calculating out the dispersion of the path. Path dispersion derives from the dispersion introduced by the fiber. The dispersion amount introduced by the fiber is equal to the fiber dispersion coefficient multiplied by the fiber length. Therefore, once the fiber length is known, the dispersion amount introduced by the fiber can be obtained. Meanwhile, various optical components on the path also introduce a dispersion amount. Such dispersion amount can be obtained through the parameter table of the optical component. The dispersion amount introduced by all sections of the fiber is added to the dispersion amount introduced by all the optical components, namely, the sum of dispersion, to obtain the dispersion amount of the whole path. Optical signals have a certain dispersion tolerance. When the dispersion amount of an optical signal exceeds the dispersion tolerance of the signal, the signal is not correctly receivable. Therefore, a dispersion compensation apparatus is generally deployed in an optical transmission system to perform either optical compensation or electrical compensation, and may be a fixed dispersion compensation apparatus or an adjustable dispersion compensation apparatus. When a dispersion compensation apparatus exists in the transmission system, the final dispersion amount of the path is the foregoing sum of dispersion minus the compensation amount of the dispersion compensation apparatus.

The dispersion compensation information of the optical signals in the network node interface can also be flooded to the path calculation server by extending the OSPF-TE protocol in the same way as flooding the power parameter. The processing mode which takes other constraint conditions into consideration is similar to the foregoing processing mode, and is not repeated here any further.

The judging unit 213 is configured to judge whether the wavelength path impairment parameter calculated out by the second calculating unit 212 meets the impairment requirement indicated by the wavelength path constraint conditions received by the receiving unit 20.

The indicating unit 214 is configured to generate the corresponding wavelength impairment compensation information according to the wavelength path constraint conditions and the resource information after receiving a negative judgment result output by the judging unit 213. The wavelength impairment compensation information may include the value of at least one of these parameters: power of the wavelength signal in the interface of the network node, dispersion compensation, and PMD compensation; and may also include the adjustment amount of at least one of these parameters: power of the wavelength signal in the interface of the network node, dispersion compensation, and PMD compensation. For example, this embodiment supposes that a wavelength connection from the source network node to the destination network node needs to be set up, this wavelength connection needs to pass through the intermediate network node x, and the wavelength path constraint condition which needs to be fulfilled by the connection is that the minimum OSNR value of the wavelength connection to be set up is OSNR1. The resource information reveals that the power of the source network node is adjustable and its variable range is 1-6 dB, and the power of the intermediate network node x is also adjustable and its variable range is 0.1-20 dB. The judging unit 213 determines that the calculated OSNR of the wavelength path does not meet the requirement of being at least OSNR1. Through the foregoing wavelength path constraint condition and resource information, the indicating unit 214 can generate this impairment compensation information: adjusting the power by 2 dB when the source network node sets up the wavelength connection, and adjusting the power by 1 dB when the intermediate network node x sets up the wavelength connection. Therefore, in the process of setting up the wavelength connection, the corresponding network node can adjust the corresponding impairment parameters according to the compensation information, let the parameters meet the constraint requirement indicated by the wavelength impairment constraint condition of the wavelength path, and set up an available wavelength connection.

The sending unit 22 is configured to send the wavelength path calculated out by the calculating unit 21 and the wavelength impairment compensation information of the wavelength path. The wavelength path impairment compensation information may be sent by extending the path calculation response message.

Each network node (the source network node, intermediate network node x, and destination network node are illustrated in the figure) further includes a connecting unit 10 and a compensating unit 11. The compensating unit 11 adjusts the relevant parameters of the network node according to the wavelength impairment compensation information calculated out by the path calculation server to make the wavelength path impairment meet the constraint condition of wavelength path impairment. The connecting unit 10 connects the wavelengths compensated by the compensating unit 11 according to the wavelength path information calculated out, and sets up an available wavelength connection. The RSVP-TE protocol may be extended to notify each interface in the wavelength path to connect wavelengths automatically, and notify each network node to adjust the relevant parameters of the relevant wavelengths in each interface and make the wavelength path impairment meet requirements. An adjustment parameter subobject may be added to the ERO object of the RSVP-TE protocol so as to notify each network node to adjust the relevant parameters of the relevant wavelengths in each interface and make the wavelength path impairment meet requirements. The composition of the extended object is as follows:

```
     0                   1                   2                   3
     0 1 2 3 4 5 6 7 8 9 0 1 2 3 4 5 6 7 8 9 0 1 2 3 4 5 6 7 8 9 0 1
    +-+-+-+-+-+-+-+-+-+-+-+-+-+-+-+-+-+-+-+-+-+-+-+-+-+-+-+-+-+-+-+-+
    |L|    Type      |     Length      |U|   Reserved   |   C-Type      |
    +-+-+-+-+-+-+-+-+-+-+-+-+-+-+-+-+-+-+-+-+-+-+-+-+-+-+-+-+-+-+-+-+
    | Parameter Type|    Reserved    |P|           Value               |
    +-+-+-+-+-+-+-+-+-+-+-+-+-+-+-+-+-+-+-+-+-+-+-+-+-+-+-+-+-+-+-+-+
```

"Type" is set to 5; and

"Parameter Type" has different values ("1" indicates adjusting the power, "2" indicates adjusting dispersion compensation, and "3" indicates PMD compensation), the P flag bit indicates the position of the adjustment ("0" indicates adjusting the parameter of the receiving end, and "1" indicates adjusting the parameter of the transmitting end; if the parameter of the receiving end and the parameter of the transmitting end of an interface need to be adjusted simultaneously, two adjustment parameter subobjects need to be carried), and "Value" represents the adjustment value. For the meanings of other fields, RFC3209 serves as a reference.

The available path information can be expressed completely through the interface subobject and label subobject (wavelength subobject, see also draft-rabbat-ccamp-gmpls-lambda-labels-00.txt) defined in the RSVP-TE protocol and through the adjustment parameter subobjects defined above. The network nodes along the route may look up the subobjects in the ERO to connect wavelengths in different interfaces and adjust the relevant parameters.

After foregoing extending, the network node may be instructed through the RSVP-TE protocol to connect wavelengths in different interfaces, and adjust the power, dispersion compensation, and PMD compensation for the wavelengths.

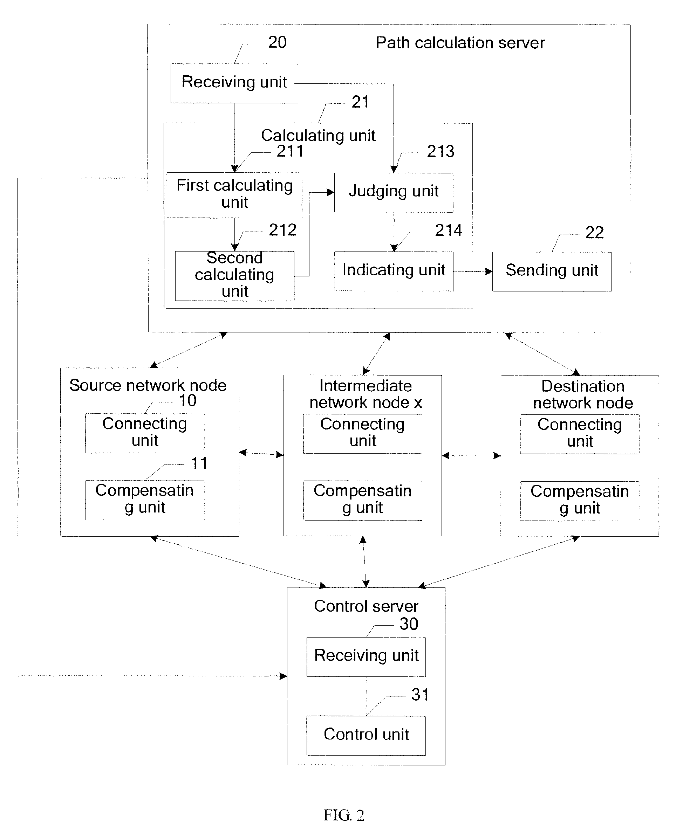

A network communication system in another embodiment of the present invention includes multiple network nodes, a path calculation server and a control server. FIG. 2 shows a source network node, an intermediate network node x, a destination network node, a path calculation server, and a control server in a wavelength connection in this embodiment. This embodiment differs from the embodiment in FIG. 1 in that: The wavelength connection in this embodiment is not set up by sending signaling which instructs the wavelengths to be connected automatically; instead, the control server controls each interface in the wavelength path to connect wavelengths automatically, and notifies each network node to adjust the relevant parameters of the relevant wavelengths in each interface and make the wavelength path impairment meet requirements. Specifically, the path calculation server sends the wavelength path calculated out and the information about impairment compensation of the wavelength path to the control server. The control server controls multiple network nodes to connect wavelengths consecutively and set up a wavelength connection according to the wavelength path calculated out by the path calculation server, and controls the network node to perform impairment compensation for the wavelength signals in the interface according to the information about the wavelength impairment compensation of the wavelength path. The control server further includes:

a receiving unit 30, configured to receive the information about the wavelength path between network nodes as a result of calculation by the path calculation server and the information about the wavelength impairment compensation of the wavelength path; and

a control unit 31, configured to: control setup of a wavelength connection between the network nodes according to the wavelength path information received by the receiving unit 30, and control each network node on the wavelength connection to perform impairment compensation for wavelength signals in the interface according to the information about the wavelength impairment compensation of the wavelength path.

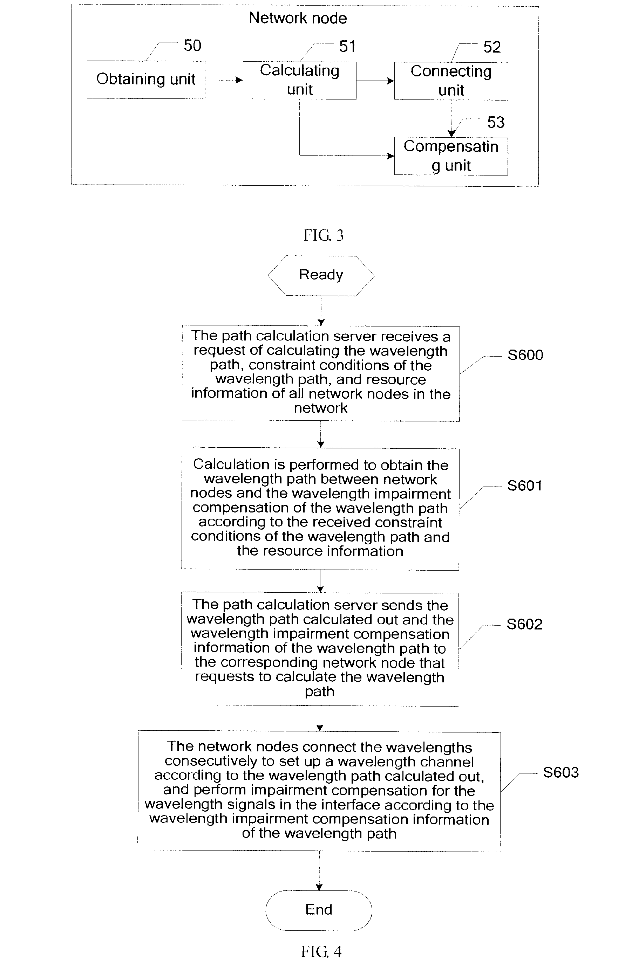

In the foregoing embodiments, both the information about the wavelength path and the wavelength impairment compensation information of the wavelength path are calculated out by the path calculation server in the network. In practice, the information about the wavelength path and the wavelength impairment compensation information of the wavelength path may be set by the network manager, or calculated out through the source network node of a specific wavelength connection. The mode of calculating such information through the source network node is similar to that of the path calculation server. A network communication system in another embodiment of the present invention includes multiple network nodes. FIG. 3 shows a structure of one of the multiple network nodes. The network node includes:

an obtaining unit 50, configured to: obtain the constraint conditions of the wavelength path from the network node to a destination network node, and obtain network resource information;
a calculating unit 51, configured to calculate the wavelength path from the network node to the destination network node and the wavelength impairment compensation information of the wavelength path according to the constraint conditions of the wavelength path and the resource information obtained by the obtaining unit;
a connecting unit 52, configured to connect wavelengths of different interfaces according to the wavelength path calculated out by the network node; and
a compensating unit 53, configured to perform impairment compensation for the wavelength in the interface according to the information about the wavelength impairment compensation of the wavelength path calculated out by each network node.

The connecting unit 52 and the compensating unit 53 may also perform automatic connection of the wavelengths of the interfaces in the wavelength path according to the extended RSVP-TE protocol, and automatically adjust the relevant parameters of the relevant wavelengths in each interface and make the wavelength path impairment meet requirements.

A network communication system in another embodiment of the present invention includes multiple network nodes and a control server. The control server controls multiple network nodes to connect the wavelengths consecutively to set up a wavelength connection according to the wavelength path calculated out by the network node, and controls the corresponding network nodes to perform impairment compensation for the wavelength in the interface according to the information about the wavelength impairment compensation of the wavelength path.

A method for setting up a wavelength connection is disclosed in an embodiment of the present invention. FIG. 4 is flowchart of a method for setting up a wavelength connection in this embodiment. The method includes the following steps:

Step 600: The path calculation server receives a request of calculating the wavelength path, constraint conditions of the wavelength path, and resource information of all network nodes in the network. The path calculation server may obtain the request of calculating the trail and the constraint conditions of the wavelength path through the extended PCECP protocol. Practice proves that: The impairment factors that affect optical signals include power attenuation, dispersion, and noise. Therefore, the constraint conditions of the wavelength path may include: power attenuation tolerance of the path, OSNR tolerance, dispersion tolerance, PMD tolerance, or any combination thereof. Meanwhile, the path calculation server needs to know the network resource information in order to calculate out an available wavelength path through the CSPF algorithm. The network resource information includes: interface of the network node, bandwidth of the link corresponding to the interface, penalty of the link corresponding to the interface, power attenuation of optical signals in the interface, adjustability of power parameters, variable range of power parameters, dispersion, adjustability of dispersion compensation parameters, variable range of dispersion compensation parameters, PMD, adjustability of PMD parameters, variable range of PMD parameters, power attenuation of the link connected to the interface, dispersion of the link connected to the interface, and PMD of the link connected to the interface. The path calculation server may obtain the resource information of all network nodes from any network node through a routing protocol, such as extended OSPF-TE, or obtain the resource information in other modes, for example, each network node registers the resource information onto the path calculation server. For example, a network node can flood the information, for example, power of the interface of the network node, adjustability of the power, variable range, and noise factor, to the path calculation server through the OSPF-TE protocol. Therefore, the existing OSPF-TE protocol needs to be extended by adding a sub-TLV to the TLV parameter of the OSPF-TE link. The format of the Value part of the sub-TLV is as follows:

```
         0                    1                    2                    3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
| Parameter Type|F|   Reserved |P|               NF               |
+-+-+-+-+-+-+-+-+-+-+-+-+-+-+-+-+-+-+-+-+-+-+-+-+-+-+-+-+-+-+-+-+
|          Value1              |           Value2              |
+-+-+-+-+-+-+-+-+-+-+-+-+-+-+-+-+-+-+-+-+-+-+-+-+-+-+-+-+-+-+-+-+
```

"Parameter Type" indicates type of the parameter, and the value "1" indicates that the type of the parameter is interface power.

The F flag bit indicates whether the parameter is adjustable: "0" means that the parameter is not adjustable, and "1" means that the parameter is adjustable.

The P flag bit indicates the position: "0" indicates adjusting the power of the receiving end amplifier, and "1" indicates adjusting the power of the transmitting end amplifier. If the power parameter of the receiving end and the power parameter of the transmitting end of a wavelength need to be released simultaneously, two interface power parameter sub-TLVs need to be carried.

NF represents the noise factor of the amplifier corresponding to the interface.

Value 1 represents the default value of the input power of the amplifier corresponding to the interface; and Value 2 represents the variable range of the input power.

Through the foregoing extending, each network node can flood the parameter of its interface to the path calculation server.

Likewise, path dispersion derives from the dispersion introduced by the fiber, and the dispersion amount introduced by the fiber is equal to the fiber dispersion coefficient multiplied by the fiber length. Therefore, once the fiber length is known, the dispersion amount introduced by the fiber can be obtained. Meanwhile, various optical components on the path also introduce a certain dispersion amount. Such dispersion amount can be obtained through the parameter table of the optical component.

Step S601: Calculation is performed to obtain the wavelength path between network nodes and the wavelength impairment compensation of the wavelength path according to the received constraint conditions of the wavelength path and the resource information. The obtaining of the wavelength path is the same as that in the prior art, and is not repeated here any further. The obtaining of the wavelength impairment compensation information of the wavelength path includes:

calculating the impairment parameter of the wavelength path; judging whether the impairment parameter meets the impairment requirement indicated by the constraint conditions of the wavelength path; and, if the judgment result is negative, generating the corresponding wavelength impairment compensation information according to the constraint conditions of the wavelength path and the resource information. Practice proves that: The impairment factors that affect optical signals include power attenuation, dispersion, and noise. Therefore, the constraint conditions of the wavelength path may include: power attenuation tolerance of the path, OSNR tolerance, dispersion tolerance, PMD tolerance, or any combination thereof. The impairment parameters that need to be calculated depend on the constraint conditions. If a constraint is imposed on the OSNR of the wavelength path, it is necessary to calculate the OSNR value of the wavelength path. A formula for calculating the OSNR value of the path is:

$$
OSNR_{out} = -10\log\left( 10^{-\left(\frac{P_{in1}-NF_1-10\log(h\nu\nu_r)}{10}\right)} + 10^{-\left(\frac{P_{in2}-NF_2-10\log(h\nu\nu_r)}{10}\right)} +...+ 10^{-\left(\frac{P_{inN}-NF_N-10\log(h\nu\nu_r)}{10}\right)} \right)
$$

where Pin1, Pin2, ..., PinN represent the input power of the amplifiers in the wavelength path; NF1, NF2, ..., NFN represent noise factors of the corresponding amplifiers; h is a constant; and w is a wavelength-related fixed value.

Generally, different network nodes are connected through a fiber pair. Two fibers in the fiber pair are responsible for transmitting signals to the peer and receiving signals from the peer. An interface number is assigned to the fiber pair. That is, one interface corresponds to two optical jacks. One optical jack is a transmitting end, namely, source, and the other is a receiving end, namely, sink. An amplifier is deployed at both the transmitting end and the receiving end of each interface. The input power of an amplifier has a default value. If an adjustable power regulating unit or dispersion compensating unit is applied, the input power or the dispersion compensation may be adjusted for a single wavelength.

Through the foregoing OSNR formula, it is evident that the path calculation server needs to know whether the input power Pin of the amplifier in the network node, adjustability of Pin, variable range of Pin, noise factor, and other resource information. Such resource information can be obtained through the routing protocol. For example, a network node can flood the information, for example, power of the interface of the network node, adjustability of the power, variable range, and noise factor, to the path calculation server through the OSPF-TE protocol. Therefore, the existing OSPF-TE protocol needs to be extended by adding a sub-TLV to the TLV parameter of the OSPF-TE link. The format of the Value part of the sub-TLV is as follows:

```
     0                   1                   2                   3
     0 1 2 3 4 5 6 7 8 9 0 1 2 3 4 5 6 7 8 9 0 1 2 3 4 5 6 7 8 9 0 1

    +-+-+-+-+-+-+-+-+-+-+-+-+-+-+-+-+-+-+-+-+-+-+-+-+-+-+-+-+-+-+-+-+
    | Parameter Type|F|   Reserved |P|              NF              |
    +-+-+-+-+-+-+-+-+-+-+-+-+-+-+-+-+-+-+-+-+-+-+-+-+-+-+-+-+-+-+-+-+
    |           Value1               |           Value2            |
    +-+-+-+-+-+-+-+-+-+-+-+-+-+-+-+-+-+-+-+-+-+-+-+-+-+-+-+-+-+-+-+-+
```

"Parameter Type" indicates type of the parameter, and the value "1" indicates that the type of the parameter is interface power.

The F flag bit indicates whether the parameter is adjustable: "0" means that the parameter is not adjustable, and "1" means that the parameter is adjustable.

The P flag bit indicates the position: "0" indicates adjusting the power of the receiving end amplifier, and "1" indicates adjusting the power of the transmitting end amplifier. If the power parameter of the receiving end and the power parameter of the transmitting end of a wavelength need to be released simultaneously, two interface power parameter sub-TLVs need to be carried.

NF represents the noise factor of the amplifier corresponding to the interface.

Value 1 represents the default value of the input power of the amplifier corresponding to the interface; and Value 2 represents the variable range of the input power.

Through the foregoing extending, each network node can flood the power parameter in the interface of the network node to the path calculation server, and the path calculation server can use such information to calculate the OSNR of the path.

Likewise, in the case that the dispersion on the wavelength path needs to be considered, the path calculation server needs to be capable of calculating out the dispersion of the path. Path dispersion derives from the dispersion introduced by the fiber. The dispersion amount introduced by the fiber is equal to the fiber dispersion coefficient multiplied by the fiber length. Therefore, once the fiber length is known, the dispersion amount introduced by the fiber can be obtained. Meanwhile, various optical components on the path also introduce a certain dispersion amount. Such dispersion amount can be obtained through the parameter table of the optical component. The dispersion amount introduced by all sections of the fiber is added to the dispersion amount introduced by all the optical components, namely, the sum of dispersion, to obtain the dispersion amount of the whole path. Optical signals have a certain dispersion tolerance. When the dispersion amount of an optical signal exceeds the dispersion tolerance of the signal, the optical signal is not correctly receivable. Therefore, a dispersion compensation apparatus is generally deployed in an optical transmission system to perform either optical compensation or electrical compensation, and may be a fixed dispersion compensation apparatus or an adjustable dispersion compensation apparatus. When a dispersion compensation apparatus exists in the transmission system, the final dispersion amount of the path is the foregoing sum of dispersion minus the compensation amount of the dispersion compensation apparatus.

The dispersion compensation information of the optical signals in the network node interface can also be flooded to the path calculation server by extending the OSPF-TE protocol in the same way as flooding the power parameter. The processing mode which takes other constraint conditions into consideration is similar to the foregoing processing mode, and is not repeated here any further.

This embodiment supposes that a wavelength connection from the source network node to the destination network node needs to be set up, this wavelength connection needs to pass through the intermediate network node x, and the wavelength path constraint condition which needs to be fulfilled by the connection is that the minimum OSNR value of the wavelength connection to be set up is OSNR1. The resource information reveals that the power of the source network node is adjustable and its variable range is 1-6 dB, and the power of the intermediate network node x is also adjustable and its variable range is 0.1-20 dB. It is determined that the calculated OSNR of the wavelength path does not meet the requirement of being at least OSNR1. Through the foregoing wavelength path constraint condition and resource information, the indicating unit can generate this impairment compensation information: adjusting the power by 2 dB when the source network node sets up the wavelength connection, and adjusting the power by 1 dB when the intermediate network node x sets up the wavelength connection.

Step S602: The path calculation server sends the wavelength path calculated out and the wavelength impairment compensation information of the wavelength path to the corresponding network node that requests to calculate the wavelength path.

Step S603: The network nodes connect the wavelengths consecutively to set up a wavelength connection according to the wavelength path calculated out, and perform impairment compensation for the wavelength signals in the interface according to the wavelength impairment compensation information of the wavelength path.

The RSVP-TE protocol may be extended to notify each interface in the wavelength path to connect wavelengths automatically, and notify each network node to adjust the relevant parameters of the relevant wavelengths in each interface and make the wavelength path impairment meet requirements. An adjustment parameter subobject may be added to the ERO object of the RSVP-TE protocol so as to notify each network node to adjust the relevant parameters of the relevant wavelengths in each interface and make the wavelength path impairment meet requirements. The composition of the extended object is as follows:

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|L|     Type      |      Length     |U|  Reserved  |   C-Type    |
+-+-+-+-+-+-+-+-+-+-+-+-+-+-+-+-+-+-+-+-+-+-+-+-+-+-+-+-+-+-+-+-+
| Parameter Type|    Reserved    |P|           Value            |
+-+-+-+-+-+-+-+-+-+-+-+-+-+-+-+-+-+-+-+-+-+-+-+-+-+-+-+-+-+-+-+-+
```

"Type" is set to 5; and

"Parameter Type" has different values ("1" indicates adjusting the power, "2" indicates adjusting dispersion compensation, and "3" indicates PMD compensation), the P flag bit indicates the position of the adjustment ("0" indicates adjusting the parameter of the receiving end, and "1" indicates adjusting the parameter of the transmitting end; if the parameter of the receiving end and the parameter of the transmitting end of an interface need to be adjusted simultaneously, two adjustment parameter subobjects need to be carried), and "Value" represents the adjustment value. For the meanings of other fields, RFC3209 serves as a reference.

The available path information can be expressed completely through the interface subobject and label subobject (wavelength subobject, see also draft-rabbat-ccamp-gmpls-lambda-labels-00.txt) defined in the RSVP-TE protocol and through the adjustment parameter subobjects defined above. The network nodes along the route may look up the subobjects in the ERO to connect wavelengths in different interfaces and adjust the relevant parameters.

After foregoing extending, the network node may be instructed through the RSVP-TE protocol to connect wavelengths in different interfaces, and adjust the power, dispersion compensation, and PMD compensation for the wavelengths. Alternatively, in practice, the control server controls each interface in the wavelength path to connect wavelengths automatically, and notifies each network node to adjust the relevant parameters of the relevant wavelengths in each interface and make the wavelength path impairment meet requirements. Specifically, the path calculation server sends the wavelength path calculated out and the information about impairment compensation of the wavelength path to the control server. The control server controls multiple network nodes to connect the wavelengths consecutively to set up a wavelength connection according to the wavelength path calculated out by the path calculation server, and controls the corresponding network nodes to perform impairment compensation for the wavelength signal in the interface according to the information about the wavelength impairment compensation of the wavelength path.

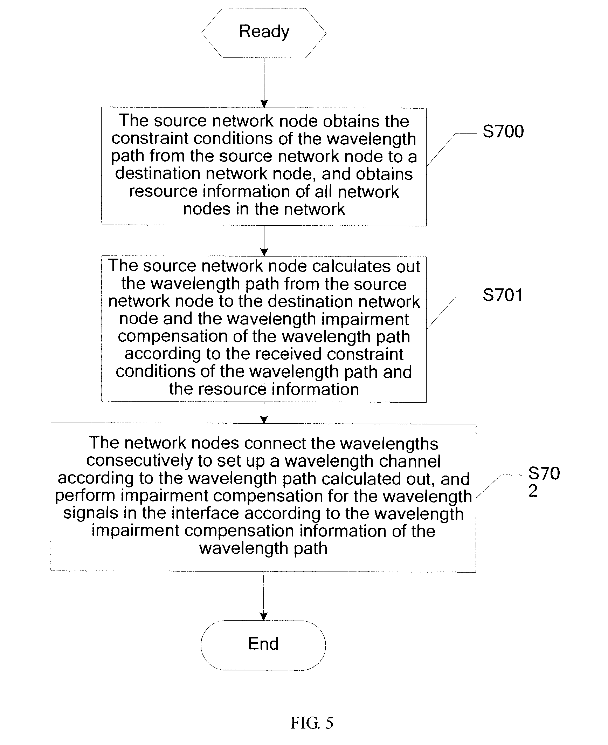

FIG. 5 is flowchart of a method for setting up a wavelength connection in another embodiment of the present invention. The method includes:

Step S700: The source network node obtains the constraint conditions of the wavelength path from the source network node to a destination network node, and obtains resource information of all network nodes in the network.

Step S701: The source network node calculates out the wavelength path from the source network node to the destination network node and the wavelength impairment compensation of the wavelength path according to the received constraint conditions of the wavelength path and the resource information.

Step S702: All the network nodes connect the wavelengths consecutively to set up a wavelength connection according to the wavelength path calculated out, and perform impairment compensation for the wavelength signals in the interface according to the wavelength impairment compensation information of the wavelength path.

This embodiment differs from the embodiment in FIG. 4 in that: The source network node of the wavelength connection automatically calculates the wavelength path and the wavelength impairment compensation of the wavelength path. The remaining part is the same as that in the embodiment illustrated in FIG. 4, and is not repeated here any further.

Through the embodiments of the present invention, the information about the wavelength impairment compensation of the wavelength path is obtained at the same time of obtaining the wavelength path between network nodes, impairment compensation is performed for the wavelength in the interface according to the wavelength impairment compensation information in the process of setting up the wavelength connection according to the wavelength path, thus setting up an available wavelength connection efficiently, simply and quickly.

After reading the foregoing embodiments, those skilled in the art are clearly aware that the present invention may be implemented through hardware, or through software in addition to a necessary universal hardware platform. Therefore, the essence of the technical solution under the present invention or the contributions to the prior art may be embodied as a software product. The software product is stored in a medium, such as ROM/RAM, magnetic disk, and compact disk, and includes several instructions that enable a computer device, such as personal computer, server, or network device, to perform all or part of the methods in the embodiments of the present invention.

Although the invention is described through some exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

**Claims**

1. A method for setting up a wavelength connection, comprising:

    obtaining a wavelength path from a source network node to a destination network node and wavelength impairment compensation information of the wavelength path; and
    setting up the wavelength connection from the source network node to the destination network node according to the wavelength path, and performing impairment compensation for wavelength signals in an interface of each network node on the wavelength path according to the wavelength impairment compensation information during setting up the wavelength connection.

2. The method according to claim 1, wherein the obtaining of the wavelength path from the source network node to the destination network node and wavelength impairment compensation information of the wavelength path comprises:

    obtaining constraint conditions of the wavelength path from the source network node to the destination network node, and obtaining network resource information; and
    calculating out the wavelength path from the source network node to the destination network node and wavelength impairment compensation information of the wavelength path according to the constraint conditions of the wavelength path and the network resource information.

3. The method according to claim 1 or 2, wherein:

    the wavelength impairment compensation information comprises a value of at least one of these parameters: power, dispersion compensation, and Polarization Mode Dispersion compensation of the wavelength signals in the interface of the network node.

4. The method according to claim 1 or 2, wherein the wavelength impairment compensation information comprises an adjustment amount of at least one of these parameters:

   power, dispersion compensation and Polarization Mode Dispersion compensation, PMD compensation of the wavelength signals in the interface of the network node.

5. The method according to claim 2, wherein the wavelength path constraint conditions comprise one or any combination of:

   power attenuation tolerance, Optical Signal Noise Ratio tolerance, dispersion tolerance, and Polarization Mode Dispersion tolerance of the wavelength path.

6. A path calculation server, comprising:

   a receiving unit, configured to: receive a request of calculating a wavelength path between network nodes, constraint conditions of the wavelength path, and network resource information; and
   a calculating unit, configured to calculate out the wavelength path between the network nodes and wavelength impairment compensation information of the wavelength path according to the received constraint conditions of the wavelength path and network resource information after the receiving unit receives the request of calculating the wavelength path.

7. The path calculation server of claim 6, further comprising: a sending unit, configured to send the wavelength path calculated out by the calculating unit and the wavelength impairment compensation information of the wavelength path.

8. The path calculation server of claim 6 or 7, wherein the calculating unit further comprises:

   a first calculating unit, configured to calculate out the wavelength path between the network nodes according to the network resource information;
   a second calculating unit, configured to calculate impair parameters of the wavelength path obtained by the first calculating unit;
   a judging unit, configured to judge whether the wavelength path impairment parameters calculated out by the second calculating unit meet impairment requirement indicated by the wavelength path constraint conditions received by the receiving unit; and
   an indicating unit, configured to generate corresponding wavelength impairment compensation information according to the wavelength path constraint conditions and the resource information after receiving a negative judgment result output by the judging unit.

9. A network node device, comprising:

   an obtaining unit, configured to: obtain constraint conditions of a wavelength path from a network node to a destination network node, and obtain resource information of all network nodes in a network;
   a calculating unit, configured to calculate the wavelength path from the network node to the destination network node and wavelength impairment compensation information of the wavelength path according to the constraint conditions of the wavelength path and the resource information obtained by the obtaining unit; and
   a connecting unit, configured to connect wavelengths of different interfaces according to the wavelength path calculated out by the network node.

10. The network node device of claim 9, further comprising: a compensating unit, configured to perform impairment compensation for wavelength signals in the interfaces of the network nodes according to the wavelength impairment compensation information of the wavelength path.

11. A control server, comprising:

   a receiving unit, configured to receive wavelength path information about a wavelength path between network nodes and wavelength impairment compensation information of the wavelength path; and
   a control unit, configured to: control setup of a wavelength connection between the network nodes according to the wavelength path information received by the receiving unit, and control each network node on the wavelength connection to perform impairment compensation for wavelength signals in an interface of each network node according to the wavelength impairment compensation information of the wavelength path.

**12.** A network communication system, comprising multiple network nodes and further comprising:

a path calculation server, configured to: receive a request of calculating a wavelength path between network nodes, constraint conditions of the wavelength path, and network resource information; and calculate out the wavelength path between the network nodes and wavelength impairment compensation information of the wavelength path according to the constraint conditions of the wavelength path and the resource information, wherein:

the network nodes connect wavelengths consecutively to set up a wavelength connection according to the wavelength path calculated out by the path calculation server, and perform impairment compensation for wavelength signals in an interface according to the information about the wavelength impairment compensation of the wavelength path.

**13.** The network communication system of claim 12, further comprising:

a control server, configured to: control multiple network nodes to connect the wavelengths consecutively to set up the wavelength connection according to the wavelength path calculated out by the path calculation server, and control the corresponding network nodes to perform impairment compensation for the wavelength signals in the interface according to the wavelength impairment compensation information of the wavelength path.

**14.** A network communication system, comprising multiple network nodes, wherein the network nodes comprise:

an obtaining unit, configured to: obtain constraint conditions of a wavelength path from a network node to a destination network node, and obtain resource information of all network nodes in a network;
a calculating unit, configured to calculate the wavelength path from the network node to the destination network node and wavelength impairment compensation information of the wavelength path according to the constraint conditions of the wavelength path and the resource information obtained by the obtaining unit;
a connecting unit, configured to connect wavelengths of different interfaces according to the wavelength path calculated out by each network node;
a compensating unit, configured to perform impairment compensation for wavelength signals in an interface of each network node according to the wavelength impairment compensation information of the wavelength path calculated out by each network node.

**15.** The network communication system of claim 14, further comprising:

a control server, configured to: control multiple network nodes to connect the wavelengths consecutively to set up a wavelength connection according to the wavelength path calculated out by the network node, and control each network node on the wavelength path to perform impairment compensation for the wavelength signals in the interface of each node according to the wavelength impairment compensation information of the wavelength path.

FIG. 1

FIG. 2

Network node

| | | |
|---|---|---|
| 50 | 51 | 52 |
| Obtaining unit | Calculating unit | Connecting unit |

53
Compensating unit

FIG. 3

Ready

The path calculation server receives a request of calculating the wavelength path, constraint conditions of the wavelength path, and resource information of all network nodes in the network — S600

Calculation is performed to obtain the wavelength path between network nodes and the wavelength impairment compensation of the wavelength path according to the received constraint conditions of the wavelength path and the resource information — S601

The path calculation server sends the wavelength path calculated out and the wavelength impairment compensation information of the wavelength path to the corresponding network node that requests to calculate the wavelength path — S602

The network nodes connect the wavelengths consecutively to set up a wavelength channel according to the wavelength path calculated out, and perform impairment compensation for the wavelength signals in the interface according to the wavelength impairment compensation information of the wavelength path — S603

End

FIG. 4

Ready

The source network node obtains the constraint conditions of the wavelength path from the source network node to a destination network node, and obtains resource information of all network nodes in the network — S700

The source network node calculates out the wavelength path from the source network node to the destination network node and the wavelength impairment compensation of the wavelength path according to the received constraint conditions of the wavelength path and the resource information — S701

The network nodes connect the wavelengths consecutively to set up a wavelength channel according to the wavelength path calculated out, and perform impairment compensation for the wavelength signals in the interface according to the wavelength impairment compensation information of the wavelength path — S702

End

FIG. 5

# INTERNATIONAL SEARCH REPORT

| International application No. |
|---|
| PCT/CN2008/071402 |

**A. CLASSIFICATION OF SUBJECT MATTER**

(See extra sheet)

According to International Patent Classification (IPC) or to both national classification and IPC

**B. FIELDS SEARCHED**

Minimum documentation searched (classification system followed by classification symbols)

IPC: H04B10/-; H04L12/-; H04Q11/-; H04B9/-; G02B6/-

Documentation searched other than minimum documentation to the extent that such documents are included in the fields searched

Electronic data base consulted during the international search (name of data base and, where practicable, search terms used)

CNPAT, CNKI, WPI, EPODOC, PAJ, IEEE, TXTWO1, TXTEP1: GMPLS, RSVP-TE, path?, lightpath??, rout+, channel+, wavelength??, compensat+, calculat+, comput+, build+, establish+, damag+, loss, impair+, dispers+, modif+, alter+, chang+, amend+, eliminat+, adjust+, correct+

**C. DOCUMENTS CONSIDERED TO BE RELEVANT**

| Category* | Citation of document, with indication, where appropriate, of the relevant passages | Relevant to claim No. |
|---|---|---|
| X | CN1897506 A (HITACHI COMM TECH LTD) 17 Jan. 2007 (17.01.2007) see claims 7,11, description pages 5-18 and figures 1-13 | 1-15 |
| A | US2006/0039703 A1 (FUJITSU LIMITED) 23 Feb. 2006 (23.02.2006) See the whole document | 1-15 |
| P,X | CN101075956 A (HUAWEI TECHNOLOGY CO. LTD.) 21 Nov. 2007(21.11.2007) See the whole document | 1-15 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| **05 Sep. 2008(05.09.2008)** | **09 Oct. 2008 (09.10.2008)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br>**LIANG, Xiaorong**<br><br>Telephone No. (86-10) 62413465 |
|---|---|

Form PCT/ISA/210 (second sheet) (April 2007)

## INTERNATIONAL SEARCH REPORT
### Information on patent family members

| International application No. |
|---|
| PCT/CN2008/071402 |

| Patent Documents referred in the Report | Publication Date | Patent Family | Publication Date |
|---|---|---|---|
| CN1897506 A | 17.01.2007 | US2007014510 A1 | 18.01.2007 |
| | | JP2007028144 A | 01.02.2007 |
| US2006/0039703 A1 | 23.02.2006 | EP1628417 A2 | 22.02.2006 |
| | | JP2006060571 A | 02.03.2006 |
| | | US7146066 B2 | 05.12.2006 |
| CN101075956 A | 21.11.2007 | None | |

Form PCT/ISA/210 (patent family annex) (April 2007)

## INTERNATIONAL SEARCH REPORT

| International application No. |
| --- |
| PCT/CN2008/071402 |

CLASSIFICATION OF SUBJECT MATTER:

H04B 10/18 (2006.01) i

H04B 10/12 (2006.01) i

Form PCT/ISA/210 (extra sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200710028772